# EUROPÄISCHE PATENTANMELDUNG

(11) **EP 4 296 595 A1**
(43) Veröffentlichungstag der Anmeldung: **27.12.2023**
(21) Anmeldenummer: 23180900.5
(22) Anmeldetag: 22.06.2023
(51) Int. Cl.: F25D 16/00, A61K 9/19, F26B 5/06, F28D 20/00

(54) **PUFFERSPEICHER ZUR KÄLTESPEICHERUNG**

(30) Priorität: 23.06.2022 DE 102022115652
(71) Anmelder: HOF Sonderanlagenbau GmbH, 35102 Lohra (DE)
(72) Erfinder: Fleischer, Oliver, 35102 Lohra (DE); Frank, Thomas, 76227 Karlsruhe (DE)
(74) Vertreter: Durm Patentanwälte PartG mbB

(57) **Zusammenfassung**

Pufferspeicher (14) zur Kältespeicherung, mit: einem Behälter (28) zum Aufnehmen eines Speichermediums; einem ersten Vorlaufeingang (VLE1) zum Empfangen von Speichermedium von einem ersten Kälteerzeuger (16) und einem ersten Rücklaufausgang (RLA1) zum Zuleiten von Speichermedium zu dem ersten Kälteerzeuger; einem ersten Vorlaufausgang (VLA1) zum Zuleiten von Speichermedium zu einem ersten Verbraucher (22) und einem ersten Rücklaufeingang (RLE1) zum Empfangen von Speichermedium von dem ersten Verbraucher; einem zweiten Vorlaufausgang (VLA2) zum Zuleiten von Speichermedium zu einem zweiten Verbraucher (24) und einem zweiten Rücklaufeingang (RLE2) zum Empfangen von Speichermedium von dem zweiten Verbraucher; einem Aufzugskanal (32) zum fluidischen Verbinden eines unteren Bereichs des Behälters mit einem oberen Bereich des Behälters mit Verbindungsöffnungen (34) zwischen dem Aufzugskanal und einem Innenraum (36) des Behälters in unterschiedlichen Höhen, wobei der erste Vorlaufausgang oberhalb des zweiten Vorlaufausgangs an den Innenraum des Behälters angebunden ist; der erste Rücklaufeingang oberhalb des zweiten Rücklaufeingangs an den Aufzugskanal angebunden ist; und eine Anbindung des ersten Vorlaufausgangs unterhalb einer Anbindung des ersten Rücklaufeingangs angeordnet ist und eine Anbindung des zweiten Vorlaufausgangs unterhalb einer Anbindung des zweiten Rücklaufeingangs angeordnet ist. Kühlanlage und Gefriertrocknungssystem.

## Beschreibung

Die vorliegende Erfindung betrifft einen Pufferspeicher zur Kältespeicherung. Die vorliegende Erfindung betrifft weiterhin eine Kühlanlage zum Kühlen von Produkten sowie ein Gefriertrocknungssystem, insbesondere für Arzneimittel.

Gefriertrocknungsverfahren sind in der Herstellung von hochwertigen Arzneimitteln von hoher Relevanz. Durch niedrige Temperaturen wird das für die Sublimation des Wassers oder der Lösungsmittel im Arzneimittel erforderliche Vakuum erreicht. Die Kühlaggregate müssen dabei hohe Kühllasten bei höheren Temperaturen (-30 °C bis -63 °C) für das Einfrieren der Fläschchen und der Arzneimittel bereitstellen, während die anschließende Trocknungsphase niedrige Temperaturen (-70 °C bis -90 °C) bei mäßigen bis niedrigen Kühlleistungen erfordert. Die für das Einfrieren erforderliche Kühllast ist zumeist deutlich höher als die in der Trocknungsphase benötigte Kühllast. Die Dampfkompressionssysteme sind dabei oft so ausgelegt, dass sie die Kühllasten während des Einfrierens bewältigen können, da die Gefrierphase für eine gute Qualität des einzufrierenden Arzneimittels entscheidend ist. Dies führt während der Trocknungsphase wiederum oft zu niedrigeren Wirkungsgraden. Da die Trocknungsphase mehrere Tage dauern kann und damit wesentlich länger ist als die Gefrierphase (oft nur wenige Stunden), wird die Hauptenergie des Gefriertrocknungsprozesses für die Aufrechterhaltung der niedrigen Temperaturen des Kondensators benötigt. Insbesondere werden oft etwa 70 bis 90 % der Gesamtenergie für die Aufrechterhaltung der niedrigeren Temperaturen während der Trocknungsphase benötigt, wohingegen nur etwa 10 bis 30 % der Gesamtenergie für das Einfrieren der Fläschchen aufgewendet werden muss.

In diesem Anwendungsumfeld werden in neueren Anlagen auch sogenannte Kaltluft-Kältemaschinen eingesetzt, die basierend auf einem Joule-Kreislauf (auch Reverse-Brayton-Prozess) zum Kühlen von Luft als Kältemittel ausgebildet sind. Diese Kaltluft-Kältemaschinen basieren dabei auf einem Komprimieren und Entspannen dieser Luft, wodurch eine Reduktion der Temperatur erfolgt. Dadurch, dass auf Kältemittel sowie auch auf die Verwendung von Stickstoff oder Trockeneis verzichtet werden kann, kann ein Global Warming-Potential von 0 erreicht werden, wodurch sich ein umweltschonendes Verfahren ergibt.

Im Bereich der Gefriertrocknung ist dabei die Dimensionierung der benötigten Kälteleistung von zentraler Bedeutung für den Energieverbrauch sowie für die Anlagekosten. Zum einen muss die Kältemaschine ausreichend groß bzw. leistungsfähig sein, um die in der Gefrierphase benötigte Kälteleistung zur Verfügung stellen zu können. Zum anderen ist diese hohe Leistung während der Trocknungsphase nicht mehr erforderlich. Diese Herausforderung stellt sich analog auch in anderen Anwendungsbereichen von Kühltechnologie, beispielsweise in der Plasmafrostung von Produkten.

In diesem Zusammenhang wird in Frank, "Lyophilization/Freeze-drying and solvent recovery with air refrigeration", The 16th Cryogenics 2021 IIR International Conference, ein Ansatz präsentiert, bei dem ein Puffertank eingesetzt wird. Durch die Verwendung dieses Puffertanks werden Spitzenlasten vermindert und Energieeinsparpotentiale realisiert. Der Puffertank dient dabei dazu, die von der Kältemaschine erzeugte Kälte zwischenzuspeichern, um diese bei Bedarf wieder verfügbar zu machen.

Eine Herausforderung besteht ausgehend hiervon darin, die Anlagenkosten sowie die Betriebskosten weiter zu reduzieren. Einerseits soll die bereitgestellte Kühlleistung für die angestrebte Anwendung ausreichend sein. Andererseits soll eine Überdimensionierung vermieden werden, um einen energieeffizienten Betrieb zu ermöglichen und keine unnötigen Anlagenkosten zu erzeugen.

Ausgehend hiervon, stellt sich der vorliegenden Erfindung die Aufgabe, einen Ansatz zum effizienten Kühlen von Produkten oder Gefriertrocknen von Produkten bereitzustellen. Insbesondere sollen sowohl die Anlagenkosten als auch die Energie- und sonstigen Betriebskosten verringert werden.

Zum Lösen dieser Aufgabe betrifft die vorliegende Erfindung in einem ersten Aspekt einen Pufferspeicher zur Kältespeicherung, mit:
einem Behälter zum Aufnehmen eines Speichermediums;
einem ersten Vorlaufeingang zum Empfangen von Speichermedium von einem ersten Kälteerzeuger und einem ersten Rücklaufausgang zum Zuleiten von Speichermedium zu dem ersten Kälteerzeuger;
einem ersten Vorlaufausgang zum Zuleiten von Speichermedium zu einem ersten Verbraucher und einem ersten Rücklaufeingang zum Empfangen von Speichermedium von dem ersten Verbraucher;
einem zweiten Vorlaufausgang zum Zuleiten von Speichermedium zu einem zweiten Verbraucher und einem zweiten Rücklaufeingang zum Empfangen von Speichermedium von dem zweiten Verbraucher;
einem Aufzugskanal zum fluidischen Verbinden eines unteren Bereichs des Behälters mit einem oberen Bereich des Behälters mit Verbindungsöffnungen zwischen dem Aufzugskanal und einem Innenraum des Behälters in unterschiedlichen Höhen, wobei
der erste Vorlaufausgang oberhalb des zweiten Vorlaufausgangs an den Innenraum des Behälters angebunden ist;
der erste Rücklaufeingang oberhalb des zweiten Rücklaufeingangs an den Aufzugskanal angebunden ist; und
eine Anbindung des ersten Vorlaufausgangs unterhalb einer Anbindung des ersten Rücklaufeingangs angeordnet ist und eine Anbindung des zweiten Vorlaufausgangs unterhalb einer Anbindung des zweiten Rücklaufeingangs angeordnet ist.

In einem weiteren Aspekt betrifft die vorliegende Erfindung eine Kühlanlage zum Kühlen von Produkten, mit:
einem Pufferspeicher wie zuvor definiert, der mit einem Speichermedium gefüllt ist; und
einem ersten Kälteerzeuger, insbesondere einer Kaltluft-Kältemaschine.

In einem weiteren Aspekt betrifft die vorliegende Erfindung ein Gefriertrocknungssystem, insbesondere für Arzneimittel, mit:
einer Kühlanlage wie zuvor definiert; und
einem Gefriertrockner mit einer Stellplatte als ersten Verbraucher und einem Eiskondensator als zweiten Verbraucher.

Bevorzugte Ausgestaltungen der Erfindung werden in den abhängigen Ansprüchen beschrieben. Es versteht, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können der Pufferspeicher, die Kühlanlage und das Gefriertrocknungssystem entsprechend den für den Pufferspeicher, die Kühlanlage und das Gefriertrocknungssystem in den abhängigen Ansprüchen beschriebenen Ausgestaltungen ausgeführt sein.

Erfindungsgemäß ist es vorgesehen, dass der Pufferspeicher mit mindestens einem Kälteerzeuger (Kältemaschine) sowie mit mindestens zwei Verbrauchern verbunden ist. Es wird ausgenutzt, dass sich innerhalb des Behälters eine Schichtung von warm (oben) nach kalt (unten) einstellt. Diese Schichtung stellt sich insbesondere dann ein, wenn innerhalb des Behälters kein bzw. nur geringe Strömungen vorliegen. Um Strömungen zu verhindern bzw. zu verringern, wird der Aufzugskanal eingesetzt. Eingeleitetes Speichermedium (Wärme- bzw. Kälteträger) wird in den Aufzugskanal eingeleitet und kann durch die Verbindungsöffnungen aus dem Aufzugskanal in den Innenraum des Behälters austreten, sobald es zu einer Schicht auf- oder abgestiegen ist, die in ihrer Temperatur der Temperatur des Speichermediums entspricht. Hierdurch werden Strömungen innerhalb des Behälters bzw. innerhalb des Innenraums des Behälters vermieden, sodass eine Schichtung beibehalten bzw. hergestellt wird. Der innerhalb des Behälters angeordnete Aufzugskanal funktioniert als eine Art hydraulischer Aufzug. Der Aufzugskanal entspricht vorzugsweise einem Steigrohr oder einem Steigkanal, durch das eingeleitetes Speichermedium auf- beziehungsweise absteigen kann, um dann in einer Schicht des Behälters auszutreten, die entsprechend temperiert ist.

Basierend auf diesem Prinzip ist es vorgesehen, dass der erste Vorlaufausgang oberhalb des zweiten Vorlaufausgangs an den Innenraum des Behälters angebunden ist und der erste Rücklaufeingang oberhalb des zweiten Rücklaufeingangs an den Aufzugskanal angebunden ist. Es werden also in anderen Worten die beiden Verbraucher (die über die Vorlaufausgänge und die Rücklaufeingänge angebunden sind) an unterschiedliche Schichten angebunden. Es werden sozusagen zwei Verbraucher mit Speichermedium unterschiedlicher Temperatur versorgt. Dies ermöglicht, dass durch einen einzelnen erfindungsgemä-ßen Pufferspeicher eine Kältespeicherung in unterschiedlichen Temperaturbereichen vorgesehen sein kann. Insbesondere ist dies von Vorteil, wenn Verbraucher unterschiedliche Temperaturen von Speichermedium benötigen. Dass dabei die Anbindung des ersten Vorlaufausgangs unterhalb der Anbindung des ersten Rücklaufeingangs angeordnet ist und die Anbindung des zweiten Vorlaufausgangs unterhalb der Anbindung des zweiten Rücklaufeingangs angeordnet ist, folgt aus der Speicherung von Kälte. Insbesondere ist der erfindungsgemäße Pufferspeicher zur Tieftemperaturspeicherung in einem Temperaturbereich von <- 40 °C ausgelegt.

Insbesondere eignet sich der erfindungsgemäße Pufferspeicher zum Verwenden in einer Kühlanlage in einem Gefriertrocknungssystem, beispielsweise für Arzneimittel. Dabei sind in einem Gefriertrockner mindestens eine Stellplatte sowie ein Eiskondensator als Verbraucher angeordnet. Die Stellplatte ist dabei der erste Verbraucher, der Eiskondensator ist der zweite Verbraucher. Beide Verbraucher benötigen unterschiedlich temperiertes Speichermedium und können vorteilhaft mit dem erfindungsgemäßen Pufferspeicher betrieben werden.

Im Gegensatz zu bisherigen Ansätzen im Bereich der Kältespeicherung ermöglicht der erfindungsgemäße Pufferspeicher eine Speicherung von Kälte in unterschiedlichen Temperaturbereichen. Grundsätzlich gilt je geringer die zu erzeugende Temperatur, desto höher der energetische Aufwand zu deren Erzeugung. Erfindungsgemäß wird es ermöglicht, Kälte im benötigten Temperaturbereich zu erzeugen und vorzuhalten bzw. bereitzustellen. Damit wird eine effiziente Kälteerzeugung ermöglicht. Verluste aufgrund eines Erzeugens von Kälte in tieferen Temperaturbereichen als benötigt werden reduziert bzw. vermieden. Energieeinsparpotentiale werden realisiert. Zudem wird die erforderliche Spitzenlast für die Kälteerzeugung reduziert. Es ist nicht erforderlich, die für den Einfrierprozess bzw. die Gefrierphase benötigte Leistung am Kälteerzeuger vorzuhalten, da hierfür der Pufferspeicher benutzt werden kann. Insoweit ergeben sich reduzierte Anlagenkosten sowie auch reduzierte Betriebskosten.

In einer bevorzugten Ausgestaltung umfasst der Pufferspeicher einen zweiten Vorlaufeingang zum Empfangen von Speichermedium von einem zweiten Kälteerzeuger und einen zweiten Rücklaufausgang zum Zuleiten von Speichermedium zu dem zweiten Kälteerzeuger. Der erste Vorlaufausgang ist zum Empfangen von Speichermedium mit einer Temperatur im Bereich einer Verbrauchstemperatur des ersten Verbrauchers ausgebildet. Der zweite Vorlaufeingang ist zum Empfangen von Speichermedium mit einer Temperatur im Bereich einer Verbrauchstemperatur des zweiten Verbrauchers ausgebildet. Insbesondere ermöglicht die Anbindung eines zweiten Kälteerzeugers eine Erzeugung von Kälte bzw. gekühltem Speichermedium in einem Temperaturbereich, der von den jeweiligen Verbrauchern benötigt wird. In anderen Worten sind die beiden Kälteerzeuger also auf unterschiedliche Temperaturbereiche optimiert und erzeugen Kälte, die für die beiden Verbraucher verwendet wird. Der Pufferspeicher speichert die erzeugte Kälte jeweils in der Erzeugungstemperatur und ermöglicht insoweit einen energieoptimierten Betrieb.

In einer bevorzugten Ausgestaltung ist der erste Rücklaufausgang und/oder der zweite Rücklaufausgang jeweils umschaltbar in zwei unterschiedlichen Höhen an den Innenraum des Behälters anbindbar. Es ist möglich, durch ein Umschalten eines Rücklaufausgangs dem über diesen Rücklaufausgang angebundenen Kälteerzeuger Speichermedium in höherer oder niedrigerer Temperatur zuzuleiten, in Abhängigkeit von der Höhe der Anbindung. Durch ein Umschalten kann insoweit also beispielsweise wärmeres oder kälteres Speichermedium dem Kälteerzeuger zugeleitet werden, sodass eine höhere Leistung abgerufen werden kann, wenn wärmeres Speichermedium zugeleitet wird. Dies ermöglicht einen Betrieb des erfindungsgemäßen Pufferspeichers in einem Zustand, in dem nur wenig Leistung benötigt wird. Ein weiteres Energieeinsparpotential kann genutzt werden.

In einer bevorzugten Ausgestaltung umfasst der Pufferspeicher einen Zusatz-Vorlaufausgang zum Zuleiten von Speichermedium zu dem ersten Verbraucher. Der Zusatz-Vorlaufausgang ist unterhalb des ersten Vorlaufausgangs an den Innenraum des Behälters angebunden und vorzugsweise über ein Ventil mit dem ersten Vorlaufausgang verbindbar. Insbesondere ist es möglich, dass der Zusatz-Vorlaufausgang in einem unteren Bereich des Behälters angebunden ist und insoweit eine Entnahme von maximal kaltem Speichermedium ermöglicht. Diese Anordnung ermöglicht ein Beimischen von maximal kaltem Speichermedium, um insoweit eine Zusatzleistung verfügbar zu machen, beispielsweise wenn diese zum Abfedern von Spitzenlasten benötigt wird. Es ergibt sich eine weitere Option, die Dimensionierung der Kälteerzeuger zu reduzieren, um Anlagenkosten zu reduzieren.

In einer bevorzugten Ausgestaltung ist der Aufzugskanal innerhalb des Behälters angeordnet. Zusätzlich oder alternativ ist der Aufzugskanal als perforierte Säule ausgebildet. Zusätzlich oder alternativ ist der Aufzugskanal aus Edelstahl, insbesondere Edelstahl mit Polytetrafluorethylen-Beschichtung, oder aus einem Sonderkunststoff für Tiefsttemperaturanwendungen ausgebildet. Durch eine Anordnung des Aufzugskanals innerhalb des Behälters können Verluste vermindert werden, da eine Isolierung des Behälters bzw. des Aufzugskanals optimiert werden kann. Durch eine Ausbildung als perforierte Säule ergibt sich eine kostengünstige Herstellung und eine optimierte Funktionsweise. Durch die Verwendung der oben genannten Materialien können lange Lebensdauern im Zusammenhang mit geeigneten Speichermedien für die Kältespeicherung realisiert werden.

In einer bevorzugten Ausgestaltung umfasst der Pufferspeicher einen weiteren Aufzugskanal zum fluidischen Verbinden des unteren Bereichs des Behälters mit dem oberen Bereich des Behälters mit Verbindungsöffnungen zwischen dem weiteren Aufzugskanal und dem Innenraum des Behälters in unterschiedlichen Höhen. Der erste Vorlaufeingang und/oder der zweiten Vorlaufeingang sind vorzugsweise an den weiteren Aufzugskanal angebunden. Weiter vorzugsweise ist der weitere Aufzugskanal innerhalb des Behälters angeordnet, als perforierte Säule ausgebildet und/oder aus Edelstahl, insbesondere Edelstahl mit Polytetrafluorethylen-Beschichtung, oder aus einem Sonderkunststoff für Tiefsttemperaturanwendungen ausgebildet. Durch die Verwendung eines weiteren Aufzugskanals, der insbesondere entsprechend dem ersten Aufzugskanal ausgebildet sein kann, wird eine weitere Verminderung von Strömungen innerhalb des Behälters erreicht. Es kann insoweit ein höherer Durchsatz in den beiden Aufzugskanälen für Speichermedium bereitgestellt werden. Die Kapazität für die Auf- und Abgabe von Speichermedium aus dem Tank wird vergrößert. Durch die Anordnung mindestens eines der beiden Vorlaufeingänge, also der Rückführung von den Verbrauchern, können die entstehenden Strömungen optimiert werden. Insbesondere ist es dabei möglich, dass der weitere Aufzugskanal entsprechend dem ersten Aufzugskanal ausgebildet sein kann, um so die Herstellungskosten weiter zu vermindern. Es ergeben sich weitere Energieeinsparpotentiale.

In einer bevorzugten Ausgestaltung ist der erste Vorlaufeingang und/oder der zweite Vorlaufeingang sowie der erste Rücklaufausgang und/oder der zweite Rücklaufausgang zum Anbinden an eine oder mehrere Kaltluft-Kältemaschinen ausgebildet. Es versteht sich, dass ein Wärmetauscher zwischengeschaltet ist. Die Verwendung von Kaltluft-Kältemaschinen in Zusammenarbeit mit dem erfindungsgemäßen Pufferspeicher ermöglicht eine weitere Energieoptimierung, da durch die Kaltluft-Kältemaschinen unterschiedliche Temperaturen bzw. unterschiedliche Kälten erzeugt werden können.

In einer bevorzugten Ausgestaltung ist der Pufferspeicher zum Verwenden von Silikonöl als Speichermedium ausgebildet. Es hat sich gezeigt, dass Silikonöl vorteilhafte Eigenschaften hinsichtlich des Speicherns von Kälte aufweist und auch eine effiziente Schichtbildung innerhalb des Pufferspeichers ermöglicht.

In einer bevorzugten Ausgestaltung ist der erste Rücklaufausgang und/oder der zweite Rücklaufausgang sowie der erste Vorlaufausgang und/oder der zweite Vorlaufausgang über innerhalb des Behälters in Vertikalrichtung verlaufende und unten aus dem Behälter austretende Rohre an den Innenraum des Behälters angebunden. Die Rohre weisen vorzugsweise an ihrem Ende im Behälter eine 180°-Biegung auf. Alle Anbindungen befinden sich unten am Behälter, sodass eine effiziente Isolierung des Behälters ermöglicht wird. Die auftretenden Verluste können reduziert bzw. minimiert werden. Durch eine Verwendung einer 180°-Biegung am Ende der Rohre ergibt sich eine möglichst geringe Beeinflussung der Strömungen innerhalb des Behälters, sodass eine Durchmischung der verschiedenen Temperaturschichten minimiert werden kann. Es ergibt sich ein energieeffizienter Betrieb.

In einer bevorzugten Ausgestaltung ist der Behälter zum Aufnehmen eines Füllmaterials, insbesondere Kies, ausgebildet. Zudem sind innerhalb des Behälters vorzugsweise horizontale Aufnahmeeinrichtungen zum Aufnehmen des Füllmaterials in unterschiedlichen Höhen angeordnet, insbesondere perforierte Bleche. Durch die Verwendung eines Füllmaterials kann die Menge an benötigtem Speichermedium verringert werden. Es ergibt sich ein Kosteneinsparpotential. Durch die Verwendung von perforierten Blechen wird es möglich, dass dennoch die gesamte Höhe und insoweit die gesamte Schichtung unverändert erhalten werden kann, sodass im Wesentlichen keine weitere Designänderung notwendig ist. Kies ist kostengünstig und temperaturbeständig. Es ergeben sich weitere Kosteneinsparpotentiale in der Herstellung des Pufferspeichers und im Betrieb.

In einer bevorzugten Ausgestaltung ist der Behälter zum Aufnehmen eines Phasenwechselmaterials ausgebildet, insbesondere eines Phasenwechselmaterials mit einer Phasenwechseltemperatur im Bereich einer Verbrauchstemperatur des ersten Verbrauchers und/oder eines Phasenwechselmaterials mit einer Phasenwechseltemperatur im Bereich einer Verbrauchstemperatur des zweiten Verbrauchers. Innerhalb des Behälters sind vorzugsweise horizontale Aufnahmeeinrichtungen zum Aufnehmen des Phasenwechselmaterials in unterschiedlichen Höhen angeordnet, insbesondere perforierte Bleche. Es ist möglich, durch die zusätzliche Verwendung von Phasenwechselmaterial die Kapazität des erfindungsgemäßen Pufferspeichers weiter zu erhöhen. Es kann sozusagen durch den Phasenwechsel des Phasenwechselmaterials Kälte gespeichert werden, die dann später zu einer definierten Temperatur wieder abgerufen werden kann. Insoweit ergibt sich ein definierter Temperaturbereich. Energieeinsparungen können erreicht werden, da die Speicherkapazität weiter vergrö-ßert werden kann.

In einer bevorzugten Ausgestaltung der erfindungsgemäßen Kühlanlage umfasst die Kühlanlage einen zweiten Kälteerzeuger, insbesondere eine Kaltluft-Kältemaschine.

In einer bevorzugten Ausgestaltung umfasst das erfindungsgemäße Gefriertrocknungssystem mindestens einen weiteren Gefriertrockner. Durch die Anwendung eines erfindungsgemäßen Pufferspeichers in einem Gefriertrocknungssystem mit mehreren Gefriertrocknern ergeben sich weitere Optimierungspotentiale, da die verschiedenen Gefriertrockner zu unterschiedlichen Zeiten die Kühl- und Trockenphasen durchlaufen können. Die benötigte Spitzenlast für einen Parallelbetrieb der beiden Trockner während der Gefrierphase wird vermindert, sodass die Anlagenkosten weiter reduziert werden können.

Hierin sind die verschiedenen Anbindungen aus Sicht des Behälters beschrieben. Ein- und Ausgänge beschreiben jeweils die Anbindungen an den Behälter. Vorlauf und Rücklauf beschreiben jeweils die Anbindung aus Sicht des angebundenen Kälteerzeugers bzw. aus Sicht des angebundenen Verbrauchers. Eine Anbindung der verschiedenen Ein- und Ausgänge kann innerhalb des Behälters entweder an den Innenraum des Behälters oder an den Aufzugskanal vorliegen. Unter einer Kältespeicherung versteht sich hierin insbesondere eine Tieftemperaturspeicherung in einem Kältebereich <-40 °C. Ein Speichermedium dient innerhalb des Pufferspeichers und in der Anbindung an die Verbraucher und Kälteerzeuger zum Transport der Kälte und kann auch als Wärme- bzw. Kälteträger bezeichnet werden. Vorzugsweise wird ein flüssiges Speichermedium verwendet, wobei auf der Seite der Verbraucher oder des Kälteerzeugers auch ein Kältetauscher verwendet werden kann.

Im Folgenden wird ein Ausführungsbeispiel der Erfindung unter Bezugnahme auf die beigefügten Abbildungen beschrieben. Es zeigen:
- Figur 1: eine schematische Darstellung eines erfindungsgemäßen Gefriertrocknungssystems für Arzneimittel;
- Figur 2: eine schematische Darstellung eines Leistungsverlaufs eines Gefriertrocknungsprozesses;
- Figur 3: eine schematische perspektivische Darstellung eines erfindungsgemäßen Pufferspeichers;
- Figur 4: eine schematische Darstellung eines Aufzugskanals;
- Figur 5: eine schematische Darstellung einer erfindungsgemäßen Kühlanlage;
- Figuren 6a-6g: Ansichten einer Ausführungsform eines erfindungsgemäßen Pufferspeichers; und
- Figur 7: eine schematische Darstellung eines erfindungsgemäßen Pufferspeichers mit Aufnahmeeinrichtungen.

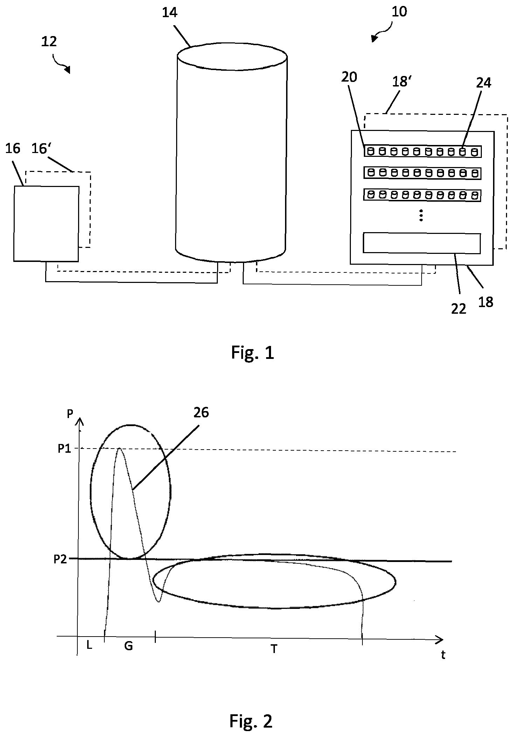

In der Figur 1 ist schematisch ein erfindungsgemäßes Gefriertrocknungssystem 10 dargestellt. Das Gefriertrocknungssystem 10 umfasst eine Kühlanlage 12 zum Kühlen von Produkten 20, die wiederum einen Pufferspeicher 14 sowie einen ersten Kälteerzeuger 16 umfasst. Zudem umfasst das Gefriertrocknungssystem 10 einen Gefriertrockner 18 mit einer Stellplatte als ersten Verbraucher 22 und einem Eiskondensator als zweiten Verbraucher 24. Bei der Darstellung handelt es sich um eine Prinzipskizze.

Wie gestrichelt angedeutet, ist es möglich, dass die Kühlanlage 12 einen zweiten Kälteerzeuger 16' oder auch weitere Kälteerzeuger (nicht dargestellt) umfasst. Ebenfalls ist es möglich, dass das Gefriertrocknungssystem 10 einen zweiten Gefriertrockner 18' bzw. noch weitere Gefriertrockner (nicht dargestellt) umfasst. Insoweit kann der Pufferspeicher 14 als Zentralspeicher ausgebildet sein, an den mehrere Kälteerzeuger und mehrere Verbraucher angeschlossen sind.

Die zu kühlenden Produkte 20 können insbesondere Arzneimittel sein, die zur Lagerung bzw. zur Haltbarmachung gefriergetrocknet werden. Oft sind Arzneistoffe in Wasser gelöst nicht lange haltbar. Durch den Gefriertrocknungsprozess werden diese haltbar gemacht. Vor der Einnahme können diese dann wieder in Wasser aufgelöst werden, um eingenommen zu werden. Gefriertrocknungssysteme in der Pharmaindustrie sind dabei oft dazu ausgebildet, gleichzeitig eine Vielzahl an entsprechenden Gefäßen aufzunehmen.

In der Figur 2 ist schematisch die benötigte Kälteleistung bei einem Gefriertrocknungsprozess in einem Gefriertrocknungssystem über die Zeit dargestellt. Die Darstellung in der Figur 2 ist dabei qualitativ zu verstehen. Auf der x-Achse ist die Zeit t abgetragen, auf der y-Achse ist die Kälteleistung P abgetragen. Dargestellt ist der Leistungsbedarf 26 an Kühlleistung. In einer Gefrierphase G besteht zunächst einer hoher Leistungsbedarf mit einer Spitzenleistung P1, da die Produkte an den Stellplatten auf eine Temperatur von beispielsweise -30 °C bis -55 °C gekühlt werden müssen. Diese Gefrierphase G dauert üblicherweise einige Stunden. In der nachfolgenden Trocknungsphase T ist die erforderliche Kühlleistung und die Spitzenleistung P2 zumeist deutlich geringer, da die zu kühlenden bzw. zu trocknenden Produkte bereits eine tiefe Temperatur haben und der Trocknungsprozess vergleichsweise langsam abläuft. Üblicherweise dauert die Trocknungsphase T daher auch einige Tage. Die Leistung ist dabei üblicherweise an einem Eiskondensator erforderlich, der auf eine Temperatur von beispielsweise -70 °C bis -90 °C gekühlt wird.

In herkömmlichen Ansätzen ist der Kälteerzeuger oft so dimensioniert, dass die Spitzenlast P1 in der Gefrierphase G abgedeckt werden kann. Erfindungsgemäß wird vorgeschlagen, vor der Gefrierphase in einer Ladephase einen Pufferspeicher aufzuladen, sodass dann in der Gefrierphase Kälteleistung aus diesem Pufferspeicher entnommen werden kann. Dies bewirkt, dass die benötigte Leistung des Kälteerzeugers deutlich reduziert werden kann. Im dargestellten Beispiel in der Figur 2 kann beispielsweise ein Kälteerzeuger mit einer Leistung < P1 verwendet werden.

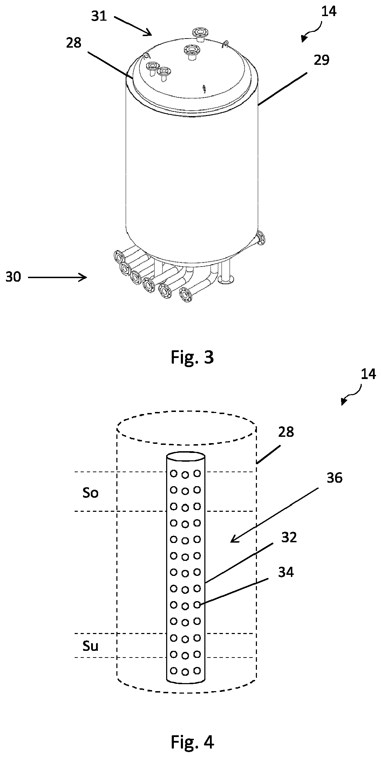

In der Figur 3 ist eine schematische Isometrieansicht einer Ausführungsform eines erfindungsgemäßen Pufferspeichers 14 dargestellt. Der Pufferspeicher 14 umfasst insbesondere einen Behälter 28 zum Aufnehmen eines Speichermediums. Der Behälter 28 kann dabei insbesondere ein Edelstahltank sein. Als Speichermedium wird vorzugsweise Silikonöl verwendet, da dieses eine Anwendung bei tiefen Temperaturen ermöglicht und vorteilhafte Eigenschaften hinsichtlich der Viskosität aufweist. Der Pufferspeicher 14 umfasst weiterhin mehrere Aus- und Eingänge 30 zum Anbinden mindestens eines Kälteerzeugers und mindestens zweier Verbraucher. Die mehreren Ein- und Ausgänge 30 sind dabei im dargestellten Ausführungsbeispiel in einem unteren Bereich des Pufferspeichers 14 angeordnet. Diese Anordnung ermöglicht, dass eine effiziente Isolierung des Behälters 28, beispielsweise durch eine dicke Isolierschicht 29, ermöglicht wird. Beispielsweise kann eine Vakuumisolierung vorgesehen sein. Durch die Anordnung aller Ein- und Ausgänge 30 im unteren Bereich ist keine Unterbrechung dieser Isolierschicht 29 im oberen Bereich notwendig. Die weiteren Anschlüsse 31 im oberen Bereich des Pufferspeichers 14 können dabei beispielsweise zum Anbinden von Füllstandssensoren oder Temperaturfühlern bzw. einer Entlüftung dienen.

In der Figur 4 ist schematisch der Pufferspeicher 14 bzw. der Behälter 28 des Pufferspeichers 14 dargestellt. Innerhalb des Pufferspeichers 14 ist ein Aufzugskanal 32 vorgesehen, der einen unteren Bereich des Behälters 28 mit einem oberen Bereich fluidisch verbindet. Insbesondere ist es möglich, dass in dem Aufzugskanal 32 Speichermedium auf- oder absteigt. Der Aufzugskanal 32 ist über mehrere Verbindungsöffnungen 34 mit einem Innenraum 36 des Behälters 28 verbunden. Durch diese Verbindungsöffnungen 34 kann Speichermedium aus dem Aufzugskanal in den Innenraum 36 des Behälters 28 austreten bzw. zwischen Innenraum 36 und Aufzugskanal 32 ausgetauscht werden.

Der erfindungsgemäß vorgesehene Aufzugskanal 32 dient dabei dazu, innerhalb des Behälters 28 eine Schichtung des Speichermediums zu ermöglichen. Beispielsweise kann in einer unteren Schicht Su kälteres Speichermedium vorhanden sein, wohingegen in einer oberen Speicherschicht So vergleichsweise wärmeres Speichermedium vorhanden sein kann. Die untere Schicht Su kann beispielsweise Speichermedium in einem Temperaturbereich von -70 °C bis - 90 °C enthalten, wohingegen die obere Schicht So beispielsweise Speichermedium in einem Temperaturbereich zwischen -40 °C und -55 °C enthalten kann.

Durch eine Anbindung der verschiedenen Rückführungen von Speichermedium in den Pufferspeicher 14 an den Aufzugskanal 32 wird erreicht, dass das eintretende Speichermedium nicht direkt in den Innenraum 36 des Behälters 28 gelangt, sondern zunächst innerhalb des Aufzugskanals 32 auf- oder absteigen kann, um dann erst an der passenden Schicht durch die Verbindungsöffnungen 34 in den Innenraum auszutreten. Strömungen im Innenraum 36, durch die die Schichtung verloren gehen könnte, werden vermieden. Es kann also Speichermedium unbekannter Temperatur in den Pufferspeicher 14 eingeleitet werden, und direkt der richtigen Schicht zugeführt werden.

Die schichtweise Einlagerung von Speichermedium innerhalb des Pufferspeichers 14 ermöglicht dabei eine Entnahme von Speichermedium in einer Temperatur, die einer Verbrauchstemperatur der Verbraucher möglichst nahekommt. Es kann erreicht werden, dass die Temperatur des entnommenen Speichermediums möglichst genau der Temperatur entspricht, die am Verbraucher benötigt wird. Insbesondere ermöglicht die Schichtung dabei eine Anbindung mehrerer Verbraucher und einen optimierten Betrieb. Es wird vermieden, dass Verbraucher mit stark gekühltem Speichermedium beschickt werden und insoweit eine hohe Kühlleistung zum Kühlen des Speichermediums aufgewendet wird, ohne dass diese tiefe Temperatur überhaupt erforderlich ist. Es ergibt sich ein energieoptimierter Betrieb. Energieverluste beim Laden des Pufferspeichers bzw. beim Betrieb einer entsprechenden Kühlanlage werden vermieden.

Wie in der Figur 4 dargestellt, kann der Aufzugskanal 32 insbesondere innerhalb des Behälters 28 angeordnet sein. Grundsätzlich ist es aber auch möglich, dass der Aufzugskanal 32 außerhalb des Behälters angeordnet ist, wobei diese Anordnung gegebenenfalls eine Isolierung erschwert. Weiterhin ist dargestellt, dass der Aufzugskanal 32 als perforierte Säule ausgebildet sein kann. Die Verbindungsöffnungen können beispielsweise als Bohrungen in dieser Säule ausgeführt sein. Vorteilhaft ist es insbesondere, wenn der Aufzugskanal 32 als perforierte Säule aus Edelstahl bzw. aus Edelstahl mit Polytetrafluorethylen-Beschichtung ausgebildet ist. Ebenfalls möglich ist es, dass ein Sonderkunststoff für Tiefsttemperaturanwendungen verwendet wird. Es ergibt sich eine effiziente Herstellbarkeit sowie eine hohe Lebensdauer.

Dabei ist es möglich, dass innerhalb des Pufferspeichers 14 neben dem Aufzugskanal 32 ein weiterer Aufzugskanal (nicht dargestellt) angeordnet ist. Dieser weitere Aufzugskanal kann beispielsweise in entsprechender Weise ebenfalls als perforierte Edelstahl-Säule ausgebildet sein. Durch die Verwendung eines weiteren Aufzugskanals kann eine weitere Optimierung von Strömungen erreicht werden. Insbesondere wird es möglich, dass eine größere Menge an Speichermedium in den Pufferspeicher 14 bzw. in den Innenraum 36 des Behälters 28 zurückgeführt wird, ohne dass es innerhalb des Behälters zu Strömungen und dabei zu einer Durchmischung und einer Auflösung der Schichten innerhalb des Behälters 28 kommt.

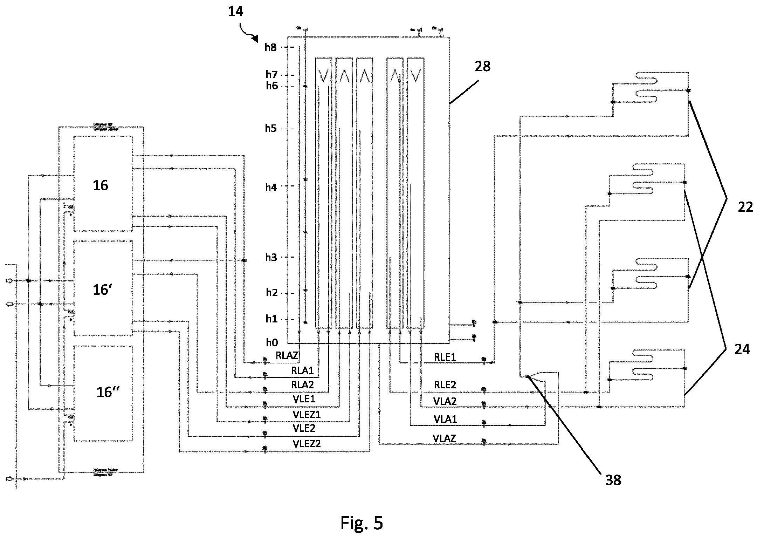

In der Figur 5 ist die Funktionsweise des erfindungsgemäßen Pufferspeichers 14 schematisch illustriert. Die linke Seite in der Figur 5 entspricht der Erzeugerseite. Im dargestellten Ausführungsbeispiel ist der Pufferspeicher 14 über einen ersten Vorlaufeingang VLE1 und einen ersten Rücklaufausgang RLA1 mit einem ersten Kälteerzeuger 16 verbunden. Im dargestellten Ausführungsbeispiel ist ein (optionaler) zweiter Kälteerzeuger 16' dargestellt, der über einen zweiten Vorlaufeingang VLE2 und einen zweiten Rücklaufausgang RLA2 an den Pufferspeicher 14 angebunden ist. Weiterhin ist im dargestellten Ausführungsbeispiel dargestellt, dass ein zusätzlicher umschaltbarer Rücklaufausgang RLAZ vorgesehen ist, der eine Zuleitung von Speichermedium aus einem obersten Bereich des Behälters 28 zu dem ersten und/oder zweiten Kälteerzeuger 16, 16' ermöglicht. Dabei ist eine Umschaltbarkeit vorgesehen, sodass der erste Rücklaufausgang RLA1 bzw. der zweite Rücklaufausgang RLA2 umschaltbar an den zusätzlichen Rücklaufausgang RLAZ angebunden werden können. Durch die Umschaltung eines Rücklaufausgangs RLA1, RLA2 auf den zusätzlichen Rücklaufausgang RLAZ wird erreicht, dass das wärmste Speichermedium aus der obersten Schicht des Behälters 28 zu dem Kälteerzeuger bzw. zu den Kälteerzeugern zurückgeleitet werden kann, um insoweit eine maximale Leistung des Kälteerzeugers abrufen zu können.

Im dargestellten Ausführungsbeispiel ist neben dem Kälteerzeuger 16 und dem optionalen zweiten Kälteerzeuger 16' noch ein weiterer Kälteerzeuger 16" eingezeichnet. Es versteht sich, dass zumindest ein Kälteerzeuger notwendig ist, es jedoch möglich ist, weitere Kälteerzeuger anzubinden. Die Anschlüsse des weiteren Kälteerzeugers 16" sind im dargestellten Ausführungsbeispiel aus Übersichtlichkeitsgründen nicht dargestellt. Die Kälteerzeuger 16, 16', 16" können insbesondere als Kaltluft-Kältemaschinen ausgebildet sein. In derartigen Kaltluft-Kältemaschinen wird Luft als Kühlmedium eingesetzt. Es versteht sich, dass beim Einsatz von Silikonöl als Speichermedium oder eines anderen Speichermediums dann ein Wärmetauscher (nicht eingezeichnet) notwendig ist, um die durch die Kaltluft-Kältemaschine erzeugte Kälte an das Speichermedium zu übertragen und in den erfindungsgemäßen Pufferspeicher 14 zu überführen.

Im dargestellten Ausführungsbeispiel sind die beiden Vorlaufeingänge VLE1, VLE2 ebenfalls umschaltbar ausgebildet, sodass eine Einlagerung des von dem Kälteerzeuger empfangenen Speichermediums in zwei unterschiedlichen Höhen innerhalb des Behälters 28 möglich ist. In der Darstellung ist beispielhaft eine Umschaltmöglichkeit des ersten Vorlaufeingangs VLE1 auf einen zusätzlichen ersten Vorlaufeingang VLEZ1 vorgesehen. Der zusätzliche erste Vorlaufeingang ermöglicht eine Zuleitung von Speichermedium in eine tiefere Schicht innerhalb des Behälters 28. Im dargestellten Ausführungsbeispiel ist dieser Ansatz insoweit analog auch für den zweiten Vorlaufeingang VLE2 bzw. einen zusätzlichen zweiten Vorlaufeingang VLEZ2 umgesetzt.

In der Darstellung entsprechen die innerhalb des Behälters 28 eingezeichneten Höhen h0, h1, h2, h3, h4, h5, h6, h7 und h8 dabei den Höhen, in denen die verschiedenen Ein- und Ausgänge an den Innenraum des Behälters bzw. an den Aufzugskanal angebunden sind. Aus Übersichtlichkeitsgründen ist in der Darstellung der Figur 5 der Aufzugskanal selbst nicht eingezeichnet. Üblicherweise sind die Eingänge (Vorlaufeingänge zum Empfangen von Speichermedium von den Kälteerzeugern und Rücklaufeingänge zum Empfangen von Speichermedium von den Verbrauchern) jeweils an den Aufzugskanal bzw. die Aufzugskanäle angebunden, um eine Rückführung des Speichermediums an die jeweils zutreffende Temperaturschicht zu ermöglichen.

Die rechte Seite in der Figur 5 entspricht der Verbraucherseite. Im dargestellten Ausführungsbeispiel sind zwei Verbraucher 22, 24 vorgesehen, wobei die Verbraucher jeweils zwei Wärmetauscher (bzw. Kältetauscher) umfassen. Der erste Verbraucher 22 kann dabei insbesondere den Stellplatten in einem Gefriertrockner entsprechen. Der zweite Verbraucher 24 kann insbesondere einem Eiskondensator in einem Gefriertrockner entsprechen.

Der erste Verbraucher 22 ist über einen ersten Vorlaufausgang VLA1 und einen ersten Rücklaufeingang RLE1 mit dem Pufferspeicher 14 verbunden. Über den ersten Vorlaufausgang VLA1 wird dem ersten Verbraucher 22 Speichermedium zugeleitet. Nach dem Wärmetauschprozess wird das erwärmte Speichermedium über den ersten Rücklaufeingang RLE1 vom ersten Verbraucher 22 zu dem Behälter 28 zurückgeführt. Entsprechend ist der zweite Verbraucher 24 über einen zweiten Rücklaufeingang RLE2 und einen zweiten Vorlaufausgang VLA2 angebunden.

Im dargestellten Ausführungsbeispiel ist zudem ein Zusatz-Vorlaufausgang VLAZ dargestellt, der über ein Ventil 38 mit dem ersten Vorlaufausgang VLA1 verbindbar ist.

Der zweite Verbraucher 24 benötigt Speichermedium mit einer tieferen Temperatur als der erste Verbraucher 22. Folglich ist der erste Vorlaufausgang VLA1 oberhalb des zweiten Vorlaufausgangs VLA2 an den Innenraum des Behälters 28 angebunden. Je tiefer die Entnahme angeordnet ist bzw. die Anbindung vorliegt, desto tiefer die Temperatur in der Schichtung des Speichermediums innerhalb des Pufferspeichers 14. Der erste Rücklaufeingang RLE1 ist oberhalb des zweiten Rücklaufeingangs RLE2 an den Aufzugskanal angebunden. Die Anbindung an den Aufzugskanal ist dabei vorzugsweise im Bereich einer zu erwartenden Rücklauftemperatur von den Verbrauchern vorgesehen, sodass auch innerhalb des Aufzugskanals möglichst geringe Höhendifferenzen überwunden werden müssen und insoweit die Strömungen minimiert werden.

Infolgedessen, dass es sich um einen Pufferspeicher zur Kältespeicherung handelt, ist eine Anbindung des ersten Vorlaufausgangs VLA1 unterhalb einer Anbindung des ersten Rücklaufeingangs RLE1 angeordnet und eine Anbindung des zweiten Vorlaufausgangs VLA2 unterhalb einer Anbindung des zweiten Rücklaufeingangs RLE2 angeordnet.

Erfindungsgemäß ist es also vorgesehen, dass durch die Anordnung der Vorlaufausgänge VLA1, VLA2 in unterschiedlichen Höhen und die Anordnung der Rücklaufeingänge RLE1, RLE2 in unterschiedlichen Höhen zwei Verbraucher 22, 24 mit unterschiedlichen Temperaturen versorgt werden können. Dies bedingt, dass eine Kälteerzeugung bzw. ein Kälteverbrauch jeweils in denselben Temperaturbereichen erfolgen kann.

Durch den Zusatz-Vorlaufausgang VLAZ, der unterhalb des ersten Vorlaufausgangs VLA1 an den Innenraum des Behälters angebunden ist, wird erreicht, dass eine Beimischung von sehr kaltem Speichermedium aus der untersten Schicht des Behälters 28 zur Leistungssteigerung verwendet werden kann, falls eine Spitzenlast benötigt wird.

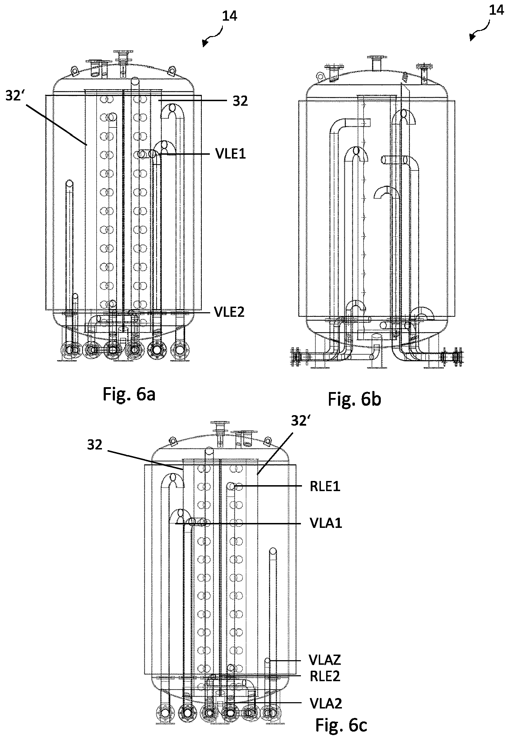

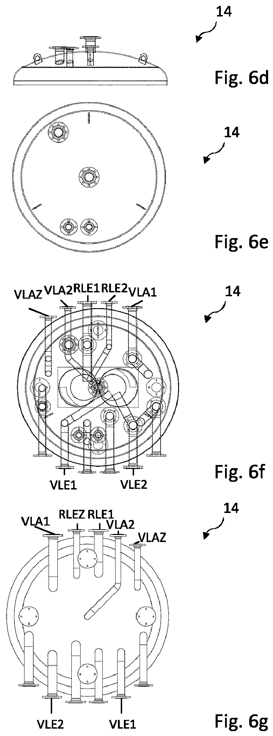

In den Figuren 6a bis 6g ist eine Ausführungsform eines erfindungsgemäßen Pufferspeichers 14 in verschiedenen Ansichten dargestellt. Figur 6a zeigt dabei eine Vorderansicht, Figur 6b zeigt eine Seitenansicht, Figur 6c zeigt eine Ansicht von hinten, Figuren 6d und 6e zeigen eine Ansicht des Deckels von der Seite und von oben, Figur 6f zeigt eine Draufsicht und Figur 6g zeigt eine Ansicht von unten. Die verschiedenen Ein- und Ausgänge sind jeweils eingezeichnet, wobei hinsichtlich der Bezugszeichen auf die Figur 5 verwiesen wird.

Im dargestellten Ausführungsbeispiel sind insbesondere der erste Rücklaufausgang RLA1 und der zweite Rücklaufausgang RLA2 sowie der erste Vorlaufausgang VLA1 und der zweite Vorlaufausgang VLA2 über innerhalb des Behälters in Vertikalrichtung verlaufende und unten aus dem Behälter austretende Rohre an den Innenraum des Behälters 28 angebunden. Dargestellt ist, dass die verschiedenen Ausgänge RLA1, RLA2, VLA1 und VLA2 an ihren Enden jeweils eine 180°-Biegung aufweisen. Durch diese Biegung wird eine Entnahme von Speichermedium aus dem Innenraum des Behälters 28 ermöglicht, bei der möglichst wenig Verwirbelungen und damit möglichst wenig Beeinflussung der verschiedenen Schichten innerhalb des Behälters 28 erfolgen.

Im dargestellten Ausführungsbeispiel ist neben dem Aufzugskanal 32 noch ein weiterer Aufzugskanal 32' vorgesehen. Die verschiedenen Eingänge VLE1, VLE2, RLE1, RLE2 sind im dargestellten Ausführungsbeispiel jeweils an den Aufzugskanal 32 bzw. den weiteren Aufzugskanal 32' angebunden. Dadurch, dass die verschiedenen Eingänge an zwei unterschiedliche Aufzugskanäle 32, 32' angebunden sind, kann innerhalb der Aufzugskanäle eine Verwirbelung vermindert werden, sodass eine effizientere Rückführung des über die Eingänge empfangenen Speichermediums und eine verbesserte Zuordnung zu den entsprechenden Schichten innerhalb des Behälters 28 ermöglicht wird. Es versteht sich, dass prinzipiell auch die Verwendung eines einzelnen Aufzugskanals möglich wäre.

Am Deckel ist in den Figuren 6e und 6d erkennbar, dass unterschiedliche Anschlüsse vorgesehen sein können, um Füllstandssensoren, Temperatursensoren sowie eine Entlüftung zu ermöglichen.

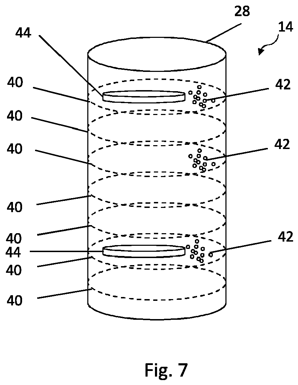

In der Figur 7 ist schematisch dargestellt, dass innerhalb des Behälters 28 horizontale Aufnahmeeinrichtungen 40 vorgesehen sein können. Diese Aufnahmeeinrichtungen 40 können beispielsweise als perforierte Bleche ausgebildet sein. Diese perforierten Bleche ermöglichen es, dass Speichermedium diese durchdringen kann. Allerdings ermöglichen die Aufnahmeeinrichtungen 40 auch, dass ein Füllmaterial 42, insbesondere Kies, innerhalb des Behälters vorgesehen sein kann. Durch das Füllmaterial 42 wird das Volumen bzw. die Menge des benötigten Speichermediums zum Füllen des Behälters 28 reduziert. Hierdurch können Kosten eingespart werden.

Zudem ist in der Figur 7 dargestellt, dass ein Phasenwechselmaterial 44 vorgesehen sein kann, durch das die Kapazität des Pufferspeichers weiter erhöht werden kann. Die Verwendung eines Füllmaterials 42 und eines Phasenwechselmaterials 44 ist dabei unabhängig voneinander zu verstehen. Lediglich aus Übersichtlichkeitsgründen sind beide Optionen in der Figur 7 dargestellt.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Pufferspeicher (14) zur Kältespeicherung, mit:
einem Behälter (28) zum Aufnehmen eines Speichermediums;
einem ersten Vorlaufeingang (VLE1) zum Empfangen von Speichermedium von einem ersten Kälteerzeuger (16) und einem ersten Rücklaufausgang (RLA1) zum Zuleiten von Speichermedium zu dem ersten Kälteerzeuger;
einem ersten Vorlaufausgang (VLA1) zum Zuleiten von Speichermedium zu einem ersten Verbraucher (22) und einem ersten Rücklaufeingang (RLE1) zum Empfangen von Speichermedium von dem ersten Verbraucher;
einem zweiten Vorlaufausgang (VLA2) zum Zuleiten von Speichermedium zu einem zweiten Verbraucher (24) und einem zweiten Rücklaufeingang (RLE2) zum Empfangen von Speichermedium von dem zweiten Verbraucher;
einem Aufzugskanal (32) zum fluidischen Verbinden eines unteren Bereichs des Behälters mit einem oberen Bereich des Behälters mit Verbindungsöffnungen (34) zwischen dem Aufzugskanal und einem Innenraum (36) des Behälters in unterschiedlichen Höhen, wobei
der erste Vorlaufausgang oberhalb des zweiten Vorlaufausgangs an den Innenraum des Behälters angebunden ist;
der erste Rücklaufeingang oberhalb des zweiten Rücklaufeingangs an den Aufzugskanal angebunden ist; und
eine Anbindung des ersten Vorlaufausgangs unterhalb einer Anbindung des ersten Rücklaufeingangs angeordnet ist und eine Anbindung des zweiten Vorlaufausgangs unterhalb einer Anbindung des zweiten Rücklaufeingangs angeordnet ist.

2. Pufferspeicher (14) nach Anspruch 1, mit einem zweiten Vorlaufeingang (VLE2) zum Empfangen von Speichermedium von einem zweiten Kälteerzeuger (16') und einem zweiten Rücklaufausgang (RLA2) zum Zuleiten von Speichermedium zu dem zweiten Kälteerzeuger, wobei
der erste Vorlaufeingang (VLE1) zum Empfangen von Speichermedium mit einer Temperatur im Bereich einer Verbrauchstemperatur des ersten Verbrauchers (22) ausgebildet ist; und
der zweite Vorlaufeingang zum Empfangen von Speichermedium mit einer Temperatur im Bereich einer Verbrauchstemperatur des zweiten Verbrauchers (24) ausgebildet ist.

3. Pufferspeicher (14) nach einem der vorstehenden Ansprüche, wobei der erste Rücklaufausgang (RLA1) und/oder der zweite Rücklaufausgang (RLA2) jeweils umschaltbar in zwei unterschiedlichen Höhen an den Innenraum (36) des Behälters (28) anbindbar sind.

4. Pufferspeicher (14) nach einem der vorstehenden Ansprüche, mit:
einem Zusatz-Vorlaufausgang (VLAZ) zum Zuleiten von Speichermedium zu dem ersten Verbraucher (22), wobei
der Zusatz-Vorlaufausgang unterhalb des ersten Vorlaufausgangs (VLA1) an den Innenraum (36) des Behälters (28) angebunden ist und vorzugsweise über ein Ventil mit dem ersten Vorlaufausgang verbindbar ist.

5. Pufferspeicher (14) nach einem der vorstehenden Ansprüche, wobei der Aufzugskanal (32)
innerhalb des Behälters (28) angeordnet ist;
als perforierte Säule ausgebildet ist; und/oder
aus Edelstahl, insbesondere Edelstahl mit Polytetrafluorethylen-Beschichtung, oder aus einem Sonderkunststoff für Tiefsttemperaturanwendungen ausgebildet ist.

6. Pufferspeicher (14) nach einem der vorstehenden Ansprüche, mit:
einem weiteren Aufzugskanal (32') zum fluidischen Verbinden des unteren Bereichs des Behälters (28) mit dem oberen Bereich des Behälters mit Verbindungsöffnungen zwischen dem weiteren Aufzugskanal und dem Innenraum (36) des Behälters in unterschiedlichen Höhen, wobei
der erste Vorlaufeingang (VLE1) und/oder der zweite Vorlaufeingang (VLE2) vorzugsweise an den weiteren Aufzugskanal angebunden ist; und
der weitere Aufzugskanal vorzugsweise innerhalb des Behälters angeordnet ist, als perforierte Säule ausgebildet ist und/oder aus Edelstahl, insbesondere Edelstahl mit Polytetrafluorethylen-Beschichtung, oder aus einem Sonderkunststoff für Tiefsttemperaturanwendungen ausgebildet ist.

7. Pufferspeicher (14) nach einem der vorstehenden Ansprüche, wobei der erste Vorlaufeingang (VLE1) und/oder der zweite Vorlaufeingang (VLE2) sowie der erste Rücklaufausgang (RLA1) und/oder der zweite Rücklaufausgang (RLA2) zum Anbinden an eine oder mehrere Kaltluft-Kältemaschinen ausgebildet sind.

8. Pufferspeicher (14) nach einem der vorstehenden Ansprüche, wobei der Pufferspeicher zum Verwenden von Silikonöl als Speichermedium ausgebildet ist.

9. Pufferspeicher (14) nach einem der vorstehenden Ansprüche, wobei der erste Rücklaufausgang (RLA1) und/oder der zweite Rücklaufausgang (RLA2) sowie der erste Vorlaufausgang (VLA1) und/oder der zweite Vorlaufausgang (VLA2) über innerhalb des Behälters (28) in Vertikalrichtung verlaufende und unten aus dem Behälter austretende Rohre an den Innenraum (36) des Behälters angebunden sind, die vorzugsweise an ihrem Ende im Behälter eine 180°-Biegung aufweisen.

10. Pufferspeicher (14) nach einem der vorstehenden Ansprüche, wobei
der Behälter (28) zum Aufnehmen eines Füllmaterials (42), insbesondere Kies, ausgebildet ist; und
innerhalb des Behälters vorzugsweise horizontale Aufnahmeeinrichtungen (40) zum Aufnehmen des Füllmaterials in unterschiedlichen Höhen angeordnet sind, insbesondere perforierte Bleche.

11. Pufferspeicher (14) nach einem der vorstehenden Ansprüche, wobei
der Behälter (28) zum Aufnehmen eines Phasenwechselmaterials (44) ausgebildet ist, insbesondere eines Phasenwechselmaterials mit einer Phasenwechseltemperatur im Bereich einer Verbrauchstemperatur des ersten Verbrauchers (22) und/oder eines Phasenwechselmaterials mit einer Phasenwechseltemperatur im Bereich einer Verbrauchstemperatur des zweiten Verbrauchers (24); und
innerhalb des Behälters vorzugsweise horizontale Aufnahmeeinrichtungen (40) zum Aufnehmen des Phasenwechselmaterials in unterschiedlichen Höhen angeordnet sind, insbesondere perforierte Bleche.

12. Kühlanlage (12) zum Kühlen von Produkten (20), mit:
einem Pufferspeicher (14) nach einem der vorstehenden Ansprüche, der mit einem Speichermedium gefüllt ist; und
einem ersten Kälteerzeuger (16), insbesondere einer Kaltluft-Kältemaschine.

13. Kühlanlage (12) nach Anspruch 12, mit:
einem zweiten Kälteerzeuger (16'), insbesondere einer Kaltluft-Kältemaschine.

14. Gefriertrocknungssystem (10), insbesondere für Arzneimittel, mit:
einer Kühlanlage (12) nach einem der Ansprüche 12 und 13; und
einem Gefriertrockner (18) mit einer Stellplatte als ersten Verbraucher (22) und einem Eiskondensator als zweiten Verbraucher (24).

15. Gefriertrocknungssystem nach Anspruch 14, mit mindestens einem weiteren Gefriertrockner.
